# FASCICULE DE BREVET EUROPEEN

(11) **EP 3 445 617 B1**
(45) Date de publication et mention de la délivrance du brevet: **29.01.2020**
(21) Numéro de dépôt: 17716965.3
(22) Date de dépôt: 22.03.2017
(51) Int. Cl.: B60R 19/50

(54) **PARECHOC DE VEHICULE AUTOMOBILE EQUIPE DE DISPOSITIFS D'ECLAIRAGE, INTEGRANT DE MOULAGE UN ECRAN DE PROTECTION DU CHASSIS EN CAS DE CHOC**
STOSSFÄNGER EINES KRAFTFAHRZEUGS MIT BELEUCHTUNGSVORRICHTUNGEN MIT EINGEFORMTEM SCHUTZSCHIRM ZUM SCHUTZ DES FAHRGESTELLS IM FALL EINES AUFPRALLS
MOTOR VEHICLE BUMPER EQUIPPED WITH LIGHTING DEVICES, INCORPORATING, MOULDED INTO IT, A PROTECTIVE SCREEN PROTECTING THE CHASSIS IN THE EVENT OF AN IMPACT

(30) Priorité: 20.04.2016 FR 1653498
(43) Date de publication de la demande: 27.02.2019
(73) Titulaire: PSA Automobiles SA, 78300 Poissy (FR)
(72) Inventeur: BORE, Michael, 25420 Voujeaucourt (FR)
(86) Numéro de dépôt international: PCT/FR2017/050673
(87) Numéro de publication internationale: WO 2017/182726

(56) Documents cités:
- EP-A1- 0 548 507
- GB-A- 2 028 993

## Description

La présente invention relève du domaine des parechocs équipant les véhicules automobiles et munis de dispositifs d'éclairage, feux de signalisation notamment. L'invention relève plus particulièrement des modalités de protection du châssis du véhicule en cas de heurt subi par le parechoc et par suite en cas de détérioration d'un dit dispositif d'éclairage équipant le parechoc.

Les véhicules automobiles sont classiquement équipés de parechocs montés respectivement à l'avant et à l'arrière du véhicule, pour protéger le véhicule vis-à-vis des chocs qu'il subit. Les chocs subis par le véhicule sont susceptibles d'être plus ou moins conséquents selon l'origine du choc, tel que par exemple en cas de heurt violent entre le véhicule et un obstacle ou un autre véhicule, ou encore en cas de choc piéton.

Les parechocs sont couramment formés par moulage d'une matière plastique et sont fixés au châssis du véhicule par des attaches. Le parechoc permet d'absorber les efforts résultant des chocs pour préserver le châssis et/ou pour limiter l'impact sur l'obstacle, notamment en cas de choc piéton. L'absorption des efforts par le parechoc est couramment réalisée par déformation du parechoc et/ou d'au moins un composant qu'il comporte, et/ou encore par rupture des attaches du parechoc sur le châssis.

Les parechocs sont fréquemment équipés de dispositifs d'éclairage, tels que notamment des projecteurs, des feux antibrouillard et/ou des feux de signalisation et/ou encore des feux d'éclairage de la plaque d'immatriculation du véhicule. Les dispositifs d'éclairage comportent classiquement un boîtier muni à sa face avant d'une paroi translucide à travers laquelle est diffusée la lumière produite par le dispositif d'éclairage.

Le boîtier loge un dispositif optique comprenant une ou plusieurs sources lumineuses et un système optique de focalisation et/ou de diffusion de la lumière produite par la ou les sources lumineuses vers la paroi translucide, pour l'émergence hors du boîtier de la lumière générée par le dispositif d'éclairage.

Pour le montage du dispositif d'éclairage sur le parechoc, le parechoc comporte à cet effet un logement de réception du boîtier d'un dispositif d'éclairage donné. La ou les sources lumineuses sont couramment montées sur une paroi arrière du boîtier destinée à être orientée vers le châssis, qui comporte au moins un passage d'émergence de la douille d'une source lumineuse donnée pour son raccordement au circuit électrique du véhicule.

Pour connaître un environnement technologique proche de l'invention, on pourra par exemple se reporter aux documents FR 2 932 744 (PEUGEOT CITROEN AUTOMOBILES SA) et US 2007 182175 (TOYOTA ENG & al.).

GB 2 028 993 A divulgue un parechoc selon le préambule de la revendication 1.

Il se pose le problème de la protection du châssis en cas de choc subit par le parechoc. En effet suite à un tel choc, le parechoc et/ou les composants qu'il comporte peuvent impacter le châssis et par suite le dégrader. Tel est notamment le cas concernant les dispositifs d'éclairage, dont les composants peuvent être chassés vers le châssis en cas de choc subi par le parechoc.

Il apparaît donc utile de limiter un tel impact pour éviter de marquer voire de déformer et/ou de dégrader significativement le ou les éléments structurels du châssis situés à l'arrière du parechoc et notamment des dispositifs d'éclairage. Il est en effet opportun de préserver le châssis pour limiter les coûts de réparation du véhicule en cas de heurt subi par le parechoc. Il est aussi utile de limiter les conséquences d'une éventuelle contrepoussée en cas de choc piéton. Parmi les solutions connues, des aménagements sont prévus à l'arrière du dispositif d'éclairage orienté vers le châssis.

Par exemple, la face arrière du dispositif d'éclairage est placée à distance significative d'un ou de plusieurs éléments structurels du châssis à préserver, pour ménager un espace de réception du dispositif d'éclairage ou de l'un au moins de ses composants lorsqu'il est chassé par suite d'un heurt subi par le parechoc. L'application d'une telle solution peut cependant être rendue délicate, voire impossible, en fonction de la configuration spécifique du véhicule et notamment de l'espace disponible entre le dispositif d'éclairage et le châssis.

Par exemple encore, des pièces sont rapportées sur le châssis en interposition entre les dispositifs d'éclairage et le ou les éléments structurels du châssis à préserver. De telles pièces permettent d'absorber les efforts de poussée du dispositif d'éclairage ou de l'un au moins de ses composant vers le châssis, notamment en cas de choc piéton. Une telle solution implique cependant un accroissement de la masse du véhicule, ce qui est à éviter. En outre, une telle solution est coûteuse et il est opportun de limiter les coûts induits pour protéger le châssis vis-à-vis des dispositifs d'éclairage ou de l'un de leurs composants.

Dans ce contexte, la présente invention a pour objet un parechoc pour un véhicule automobile, un ensemble comprenant au moins un dit parechoc et au moins un dispositif d'éclairage monté sur le parechoc, ainsi qu'un véhicule équipé d'un dit ensemble conforme à la présente invention.

L'invention vise dans sa généralité à proposer une solution pour protéger le châssis du véhicule en cas de chocs subis par le parechoc, notamment vis-à-vis d'au moins une source lumineuse équipant un dispositif d'éclairage monté sur le parechoc. L'invention s'inscrit notamment dans le cadre des contraintes économiques notoirement sévères dans le domaine de l'automobile.

Dans ce contexte un but de l'invention est de proposer la solution visée pour notamment réduire les coûts de réparation du véhicule en cas de heurt subi par le parechoc, notamment en cas de choc de faible amplitude.

Un autre but de l'invention est de proposer la solution visée qui soit structurellement simple et aisée à mettre en œuvre, notamment pour réduire les coûts induits par son application.

Un autre but de l'invention est de proposer la solution visée en évitant au mieux d'accroitre la masse du véhicule.

Un autre but de l'invention est de proposer la solution visée pouvant être aisément appliquée dans le cadre des contraintes d'encombrement liées à la configuration prédéfinie du véhicule, notamment au regard de l'espace disponible entre le parechoc et le châssis.

Les buts visés par la présente invention sont atteints individuellement ou collectivement au moins deux à deux, par application des dispositions qui suivent considérées isolément ou en combinaison au moins deux à deux.

Ainsi, l'invention a pour objet un parechoc pour un véhicule automobile. Le parechoc est du type comportant au moins un logement pour la réception d'un dispositif d'éclairage comprenant au moins une source lumineuse. Une paroi du parechoc comporte à son travers au moins une ouverture dédiée à l'émergence hors du logement d'une douille de ladite au moins une source lumineuse.

Tel que classiquement, ladite paroi du parechoc est notamment une paroi arrière destinée à être orientée vers le châssis du véhicule, en étant ménagée à distance d'une paroi avant du parechoc destinée à être orientée vers l'extérieur du véhicule pour rendre visible par les usagers de la route la lumière produite par ledit au moins un dispositif d'éclairage.

Ladite au moins une ouverture traversant la paroi arrière du parechoc ménage un débouché dudit logement vers l'extérieur du parechoc, à sa face arrière prévue pour être orientée vers le châssis du véhicule.

Le dispositif d'éclairage peut être un feu de signalisation, tel que du type indiquant un changement de direction du véhicule ou un feu antibrouillard par exemple, un dispositif d'éclairage d'une plaque d'immatriculation du véhicule, voire encore un projecteur dans le cas notamment d'une application de l'invention à un parechoc avant du véhicule.

Selon une application particulièrement adaptée de l'invention, le parechoc est de préférence un parechoc arrière du véhicule et ledit au moins un dispositif d'éclairage est un feu de signalisation ou un dispositif d'éclairage d'une plaque d'immatriculation du véhicule par exemple. Une telle application préférée n'est cependant pas restrictive quant à la portée de l'invention, qui peut être appliquée à un parechoc avant du véhicule.

Dans ce contexte, le parechoc de l'invention est principalement reconnaissable en ce que ladite paroi du parechoc comporte au moins un écran disposé hors dudit logement en regard de ladite ouverture.En d'autres termes, ledit écran est solidaire du parechoc à la face extérieure de sa paroi arrière classiquement prévue pour être orientée vers le châssis du véhicule.

L'écran forme ainsi un obstacle à l'encontre d'un déplacement d'au moins un composant du dispositif d'éclairage vers le châssis en cas de choc subi par le parechoc. Un tel composant est notamment constitué de ladite au moins une source lumineuse.

En effet par suite d'un choc auquel le parechoc est soumis, la source lumineuse est susceptible d'être expulsée hors du dispositif d'éclairage vers le châssis du véhicule. Dans ce cas, la source lumineuse heurte alors l'écran qui fait obstacle à une projection de la source lumineuse contre un élément du châssis placé à l'arrière du dispositif d'éclairage. Le châssis est ainsi protégé par l'écran de toute blessure pouvant être infligée par la source lumineuse en cas de choc subi par le parechoc.

Plus particulièrement, l'écran est avantageusement incorporé de moulage au parechoc. Plus spécifiquement, l'écran est incorporé de moulage à la paroi arrière du parechoc avec laquelle l'écran forme un ensemble monobloc.

La notion "de moulage" relative à l'incorporation de l'écran au parechoc est classiquement comprise comme étant une incorporation de l'écran au parechoc lors de l'opération de fabrication du parechoc par moulage.

Selon une forme de réalisation, l'écran comprend une platine solidaire de la paroi arrière du parechoc par l'intermédiaire d'au moins une aile disposant la platine parallèlement et à faible distance de l'ouverture.

La notion de faible distance est appréciée comme étant une distance de séparation entre ladite paroi du parechoc et l'écran, suffisante pour permettre le raccordement électrique de la douille de la source lumineuse avec le circuit électrique du véhicule.

L'aile est de préférence unique. L'aile est aussi de préférence solidaire de la platine à l'une de ses extrémités. L'aile s'étend ainsi en interposition entre la platine et ladite paroi du parechoc auxquelles l'aile est solidaire.

En d'autres termes, l'une des extrémités de la platine est reliée à la paroi arrière du parechoc par au moins une aile. L'aile étant de préférence unique, l'écran présente alors une configuration générale en dièdre dont les plans sont respectivement définis par la platine et par l'aile. L'extrémité de la platine raccordée à la paroi arrière du parechoc est l'une de ses extrémités indifféremment longitudinale ou transversale suivant les dimensions d'extension générale du parechoc respectivement longitudinalement ou transversalement, dimensions d'extension générale du parechoc considérées au moins localement dans la zone d'implantation de l'écran sur le parechoc.

De préférence, l'extrémité de jonction de la platine avec l'aile est une extrémité longitudinale de la platine, pour faciliter les modalités de solidarisation de l'aile avec ladite paroi du parechoc. En effet, l'aile est susceptible d'être inclinée par rapport à la platine et le choix de l'emplacement de sa solidarisation avec la paroi du parechoc en est facilité suivant sa direction longitudinale d'extension. Par suite, la robustesse de l'écran à l'encontre d'un heurt par la source lumineuse peut être adaptée selon sa flexibilité, à laquelle flexibilité de l'écran l'aile participe.

A titre indicatif non restrictif, l'aile est de préférence orientée par rapport à la platine suivant un angle compris entre 30° et90°.

Selon une forme de réalisation, l'écran comprend une patte de soutien de la platine à l'encontre de son fléchissement. La patte est notamment interposée entre la platine et ladite paroi du parechoc à travers laquelle est ménagée l'ouverture.

Plus particulièrement, l'aile et la patte sont respectivement ménagées à des extrémités opposées de la platine. Ainsi, notamment dans le cas préféré où l'aile est unique, de telles dispositions visent à éviter des mouvements de la platine dans son plan sous l'effet de vibrations auxquelles le parechoc est susceptible d'être soumis lors de la progression du véhicule. En effet, de telles vibrations sont génératrices de nuisances sonores inconfortables pour les passagers du véhicule.

De préférence, la patte est agencée en fusible apte à rompre sous l'effet d'un effort prédéterminé qu'elle supporte. Ainsi en cas de heurt subi par le parechoc, la patte peut être rompue pour éviter que l'écran ne fasse obstacle à une déformation du parechoc, notamment en cas de choc piéton. On relèvera qu'une éventuelle rupture de la patte ne fait pas obstacle à une retenue par l'écran de la source lumineuse en cas de choc et/ou d'une légère déformation subis par le parechoc.

Il est aussi à noter que la patte fait obstacle à une éventuelle déformation du parechoc sous l'effet d'une poussée mineure à laquelle il est soumis. Une telle poussée mineure est à apprécier hors conditions de heurt significatif contre le parechoc pour lesquelles une déformation du parechoc est prévue, tel qu'en cas d'accident routier du véhicule.

Plus spécifiquement, il est identifié une insatisfaction de la clientèle vis-à-vis d'une éventuelle déformation du parechoc sous l'effet d'une poussée mineure appliquée contre le parechoc par suite d'une prise d'appui d'un individu. Dans ce contexte, la patte constitue un organe procurant une résistance à la déformation du parechoc vis-à-vis d'une telle poussée mineure.

Par exemple, la patte est formée d'au moins une languette raccordant la platine à la paroi arrière du parechoc. La languette est susceptible d'être agencée en cornière selon la résistance à la rupture devant lui être conférée au regard dudit effort prédéterminé.

L'invention a aussi pour objet un ensemble comprenant un parechoc tel qu'il vient d'être décrit et au moins un dit dispositif d'éclairage monté sur le parechoc en étant disposé à l'intérieur d'un dit logement.

En d'autres termes, le dispositif d'éclairage est disposé transversalement au parechoc entre deux parois longitudinales en vis-à-vis constitutives du parechoc.

Les dites parois longitudinales du parechoc sont notamment respectivement formées de la paroi avant du parechoc à travers laquelle est prévue d'émerger la lumière générée par le dispositif d'éclairage et la paroi arrière du parechoc prévue pour être orientée vers le châssis du véhicule et à travers laquelle émerge la douille de ladite au moins une source lumineuse.

Ladite au moins une source lumineuse équipant le dispositif d'éclairage comporte notamment une douille pour son raccordement au circuit électrique du véhicule. La douille émerge hors de l'ouverture ménagée à travers la paroi arrière du parechoc en étant disposée à faible distance en regard de l'écran.

Plus spécifiquement, la douille émerge hors de ladite ouverture en regard de ladite platine.

L'aile et la patte sont notamment disposées respectivement de part et d'autre de l'ouverture et par suite sont avantageusement disposées de part et d'autre de la douille, de préférence suivant l'extension longitudinale du parechoc.

L'invention a aussi pour objet un véhicule automobile équipé d'un ensemble précédemment décrit. Pour rappel, ledit ensemble comprend le parechoc et ledit au moins un dispositif d'éclairage équipant le parechoc en étant disposé à l'intérieur du logement prévu pour le recevoir.

Tel que précédemment mentionné, la douille de la dite au moins une source lumineuse équipant le dispositif d'éclairage émerge hors de l'ouverture ménagée à cet effet à travers la paroi arrière du parechoc, en étant classiquement orientée transversalement au parechoc.

Le fond de la douille émergeant hors du logement à travers l'ouverture, est placé en regard de l'écran qui est interposé entre un élément structurel du châssis du véhicule et la paroi arrière du parechoc.

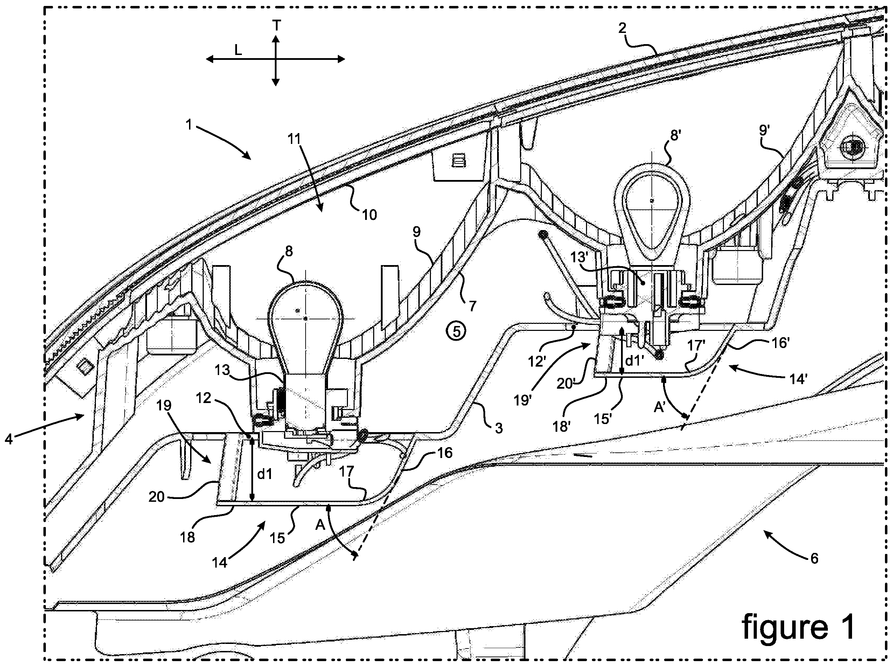

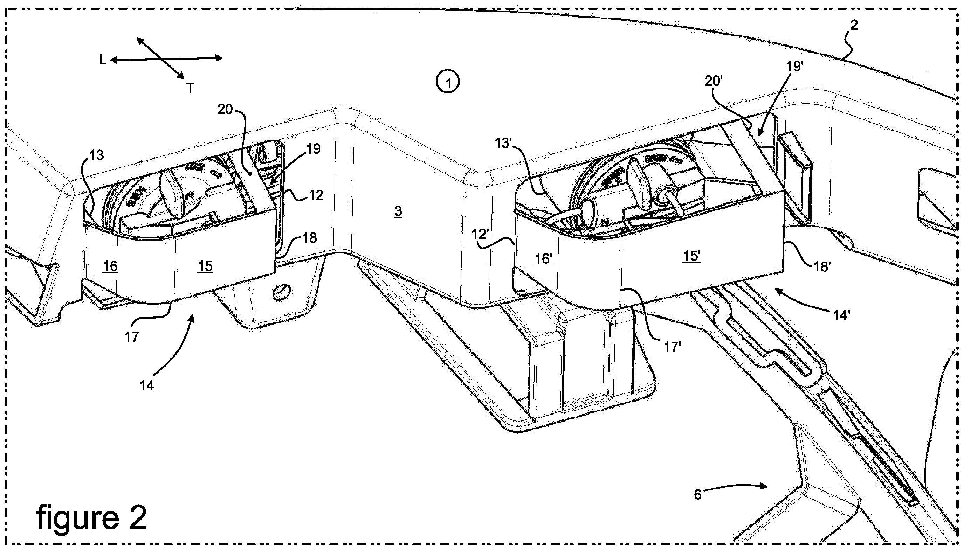

Un exemple de réalisation de la présente invention va être décrit en relation avec les figures des planches annexées, dans lesquelles :
-) la figure 1 est une illustration partielle en coupe longitudinale d'un parechoc de véhicule automobile conforme à l'invention, équipé de dispositifs d'éclairage et installé sur le véhicule,
-) la figure 2 est une illustration partielle en perspective arrière du parechoc représenté sur la figure 1 équipé de dispositifs d'éclairage et installé sur le véhicule.

Les figures et leur description exposent l'invention de manière détaillée et selon des modalités particulières de sa mise en œuvre. Elles peuvent bien entendu servir à mieux définir l'invention, tant dans ses particularités que dans sa généralité, notamment en relation avec la description générale de l'invention qui vient d'être faite. Par ailleurs pour clarifier et rendre aisée la lecture de la description détaillée qui va être faite de l'invention, les organes représentés sur les différentes figures sont respectivement identifiés dans la description des figures avec les mêmes numéros et/ou lettres de référence, sans impliquer leur représentation et/ou leur référencement sur chacune des figures.

Sur les figures, un parechoc 1 de véhicule automobile s'étend classiquement longitudinalement L en étant prévu d'être installé à l'avant ou à l'arrière du véhicule. Le parechoc 1 présente typiquement une peau comprenant une paroi avant 2 et une paroi arrière 3 disposées à distance transversale T l'une de l'autre.

Le parechoc 1 est plus spécifiquement du type connu équipé de dispositif d'éclairage 4 prévus pour être disposés à l'intérieur d'un logement 5 ou de plusieurs logements 5 respectifs ménagés entre la paroi avant 2 et la paroi arrière 3 du parechoc 1. Sur les figures, un seul dispositif d'éclairage 4 est partiellement représenté installé sur le parechoc 1.

Les notions avant et arrière affectées aux parois du parechoc 1 sont des notions relatives. La paroi avant 2 du parechoc 1 est prévue pour être orientée vers l'extérieur du véhicule en autorisant l'émergence de la lumière générée par un dispositif d'éclairage 4 donné. La paroi arrière 3 du parechoc 1 est prévue pour être orientée vers le châssis 6 du véhicule.

Sur la figure 1, le dispositif d'éclairage 4 comprend classiquement un boîtier 7 logeant au moins une source lumineuse 8, 8' orientée transversalement au parechoc 1. Le boîtier 7 est équipé d'au moins un système optique 9, 9' de réflexion de la lumière émise par ladite au moins une source lumineuse 8, 8' vers une paroi transparente 10 montée sur le boîtier 6. La lumière générée par le dispositif d'éclairage 4 peut ainsi émerger hors du dispositif d'éclairage 4 à travers la paroi transparente 10, et par suite vers l'extérieur du véhicule lorsque le parechoc 1 est monté sur la caisse du véhicule.

Ledit logement 5 est classiquement débouchant vers l'extérieur du parechoc 1 à travers des ouvertures 11, 12, 12' ménagées respectivement à travers la paroi avant 2 et la paroi arrière 3 du parechoc 1.

Des ouvertures 11 avant sont ménagées à travers la paroi avant 2 du parechoc 1 et sont respectivement obturées par les parois transparentes 10 équipant respectivement les dispositifs d'éclairage 4. Des ouvertures 12, 12' sont typiquement ménagées à travers la paroi arrière 3 du parechoc 1 pour l'émergence hors du parechoc 1 des douilles 13, 13' équipant les sources lumineuses 8, 8' pour leur raccordement au circuit électrique du véhicule.

La notion de douille 13, 13' est à apprécier comme étant un organe électrique de configuration quelconque apte au raccordement d'une ou de plusieurs sources lumineuses 8, 8' d'un dispositif d'éclairage 4 donné au circuit électrique du véhicule. En effet, la configuration de la douille 13, 13' peut varier selon la structure de la ou des sources lumineuses 8, 8'.

Sur l'exemple illustré, les sources lumineuses 8, 8' sont constituées d'ampoules à bulbe. Les sources lumineuses 8, 8' peuvent encore pour exemple être constituées d'une ou de plusieurs diodes électroluminescentes montées sur une carte électronique munie d'au moins un composant électrique constitutif de ladite douille 13, 13'.

Dans ce contexte, l'invention propose d'incorporer au parechoc 1 un ou plusieurs écrans 14, 14' respectivement affectés aux sources lumineuses 8, 8' du dispositif d'éclairage 4. Les écrans 14, 14' permettent d'interdire un déplacement des sources lumineuses 8, 8' qui leur sont affectées vers un élément du châssis 6 disposé en regard de la paroi arrière 3 du parechoc 1.

L'incorporation du ou des écrans 14, 14' au parechoc 1 est avantageusement réalisée de moulage. En d'autres termes, le ou les écrans 14, 14' équipant le parechoc 1 sont conjointement formés solidairement avec la paroi arrière 3 du parechoc 1 lors de sa formation par moulage. Le parechoc est de préférence tel que classiquement en matière plastique.

Ainsi à partir d'un aménagement simple, peu coûteux et d'une faible masse, l'élément du châssis 6 est préservé de toute détérioration par les sources lumineuses 8, 8' susceptibles d'être chassées au moins en partie hors du parechoc 1 en cas de heurt subi par le parechoc 1 et/ou en cas de déformation significative du parechoc 1. L'impact des douilles 13, 13' contre les écrans 14, 14' qui leur sont respectivement affectés est susceptible de provoquer une détérioration des sources lumineuses 8, 8', sans toutefois induire un marquage et/ou une détérioration de l'élément du châssis 6.

Une telle disposition est notamment utile en cas de choc de faible amplitude subi par le parechoc 1 et/ou en cas d'une déformation significative mais néanmoins légère du parechoc 1, notamment provoquée par suite d'un tel choc de faible amplitude. La réparation du véhicule en est simplifiée et peut être réalisée à moindres coûts. En effet seulement le parechoc 1 et/ou l'un au moins des dispositifs d'éclairage 4 font alors l'objet d'une telle réparation, en excluant une réparation du châssis 6. Il est ainsi globalement procuré un avantage économique, tant au regard de la réalisation du ou des écrans 14, 14' qu'au regard d'une réparation du véhicule en cas de choc de faible amplitude subi par le parechoc 1.

Chaque écran 14, 14' comprend une platine 15, 15' solidaire de la paroi arrière 3 du parechoc 1 par l'intermédiaire d'au moins d'une aile 16, 16'. L'aile 16, 16' s'étend au moins transversalement T en interposition entre la platine 15, 15' et la paroi arrière 3 du parechoc 1.

L'aile 16, 16' dispose la platine 15, 15' dans son plan général sensiblement parallèlement et à faible distance d1, d1' transversale de l'ouverture 12, 12' arrière ou en d'autres termes à faible distance d1, d1' transversale de la zone de la paroi arrière 3 du parechoc 1 comportant l'ouverture 12, 12' arrière. La distance d1, d1' de séparation entre la platine 15, 15' et l'ouverture 12, 12' est notamment définie par l'espace nécessaire au raccordement de la douille 13, 13' de la source lumineuse 8, 8' au circuit électrique du véhicule.

Sur l'exemple illustré, les ailes 16, 16' des différents écrans 14, 14' respectivement affectés aux sources lumineuses 8, 8' sont inclinées par rapport aux platines 15, 15' d'un angle A, A' de l'ordre de 45°. Selon la configuration du parechoc 1 et/ou du dispositif d'éclairage 4, l'angle A, A' d'une part et les distances d1, d1' d'autre part, sont susceptibles d'être de mêmes valeurs ou de valeurs respectives pour les différents écrans 14, 14'.

Pour chacun des écrans 14, 14', l'aile 16, 16' est solidaire de la platine 15, 15' à l'une première de ses extrémités 17, 17' longitudinale L. Dans ce contexte, il est souhaité d'éviter des oscillations de la platine 15, 15' dans son plan général, susceptibles de générer des nuisances sonores.

A cet effet, la platine 15, 15' est reliée à la paroi arrière 3 du parechoc 1 à chacune de ses extrémités 17, 17' et 18, 18' longitudinales L. Ainsi une deuxième extrémité 18, 18' de la platine 15, 15', longitudinalement opposée à sa première extrémité 17, 17', est solidaire de la paroi arrière 3 du parechoc 1 par l'intermédiaire d'une patte 19, 19' de soutien. Sur l'exemple illustré, la patte 19, 19' est agencée en languette 20, 20' conformée en cornière.

La patte 19, 19' est un organe fusible rompant sous l'effet d'un effort prédéterminé en cas de choc et/ou de déformation subis par le parechoc 1. Le caractère fusible de la patte 19, 19' peut lui être conférée de par sa conformation et/ou ses dimensions, et/ou par une fragilisation localisée.

L'aile 16, 16' et la patte 19, 19' sont respectivement disposées longitudinalement L de part et d'autre de la douille 13, 13' de la source lumineuse 8, 8', en maintenant conjointement la platine 15, 15' dans son plan général en regard de l'ouverture 12, 12' arrière. En cas de rupture de la patte 19, 19', la platine 15, 15' est maintenue en regard de l'ouverture 12, 12' par l'aile 16, 16', pour faire obstacle à un déplacement de la source lumineuse 8, 8' vers le châssis 6.

Plus particulièrement visible sur la figure 2, chaque écran 14, 14' est globalement agencé en capot coiffant la douille 13, 13' de la source lumineuse 8, 8' à faible distance transversale T. Un tel capot est incorporé au parechoc, de moulage notamment. Le capot est solidaire de la paroi arrière 3 du parechoc 1 par l'intermédiaire de l'aile 16, 16' et de la patte 19, 19', incorporées de moulage à la paroi arrière 3 du parechoc 1 conjointement avec la platine 15, 15'.

Le capot comprend notamment au moins l'aile 16, 16', la platine 15, 15' et la patte 19, 19'. L'aile 16, 16' s'étend au moins transversalement T voire aussi longitudinalement L tel qu'illustré, en interposition transversale T entre la platine 15, 15' et la paroi arrière 3 du parechoc 1. La platine 15, 15' prolonge longitudinalement L l'aile 16, 16' en s'étendant sensiblement parallèlement à l'ouverture 12, 12'. La patte 19, 19' prolonge la platine 15, 15' au moins transversalement T, en étant potentiellement inclinée par rapport à la platine 15, 15' tel qu'illustré.

## Revendications

1. Parechoc (1) pour un véhicule automobile, le parechoc (1) comportant au moins un logement (5) pour la réception d'un dispositif d'éclairage (4) comprenant au moins une source lumineuse (8, 8'), une paroi (3) du parechoc (1) comportant à son travers au moins une ouverture (12, 12') dédiée à l'émergence hors du logement (5) d'une douille (13, 13') de ladite au moins une source lumineuse (8, 8'), **caractérisé en ce que** ladite paroi (3) du parechoc (1) comporte au moins un écran (14, 14') disposé hors dudit logement (5) en regard de ladite ouverture (12, 12').

2. Parechoc (1) selon la revendication 1, **caractérisé en ce que** l'écran (14, 14') est incorporé de moulage au parechoc (1).

3. Parechoc (1) selon l'une quelconque des revendications 1 et 2, **caractérisé en ce que** l'écran (14, 14') comprend une platine (15, 15') solidaire de la paroi arrière (3) du parechoc (1) par l'intermédiaire d'au moins une aile (16, 16') disposant la platine (15, 15') parallèlement et à faible distance (d1, d1') de l'ouverture (12, 12').

4. Parechoc (1) selon la revendication 3, **caractérisé en ce que** l'aile (16, 16') est solidaire de la platine (15, 15') à l'une de ses extrémités (17, 17') en étant orientée par rapport à la platine (15, 15') suivant un angle (A, A') compris entre 30° et 90°.

5. Parechoc (1) selon l'une quelconque des revendications 3 et 4, **caractérisé en ce que** l'écran (14, 14') comprend une patte (19, 19') de soutien de la platine (15, 15') à l'encontre de son fléchissement.

6. Parechoc (1) selon la revendication 5, **caractérisé en ce que** l'aile (16, 16') et la patte (19, 19') sont respectivement ménagées à des extrémités (17, 17'; 18, 18') opposées de la platine (15, 15').

7. Parechoc (1) selon l'une quelconque des revendications 5 et 6, **caractérisé en ce que** la patte (19, 19') est agencée en fusible apte à rompre sous l'effet d'un effort prédéterminé qu'elle supporte.

8. Parechoc (1) selon l'une quelconque des revendications 5 à 7, **caractérisé en ce que** la patte (19, 19') est formée d'au moins une languette (20, 20') raccordant la platine (15, 15') à la paroi arrière (3) du parechoc (1).

9. Ensemble comprenant un parechoc (1) selon l'une quelconque des revendications 1 à 8 et au moins un dit dispositif d'éclairage (4) monté sur le parechoc (1) en étant disposé à l'intérieur d'un dit logement (5).

10. Véhicule automobile équipé d'un ensemble conforme à la revendication 9.

## Patentansprüche

1. Stoßfänger (1) für ein Kraftfahrzeug, wobei der Stoßfänger (1) mindestens eine Aufnahme (5) für das Aufnehmen einer Beleuchtungsvorrichtung (4) umfasst, die mindestens eine Lichtquelle (8, 8') umfasst, wobei eine Wand (3) des Stoßfängers (1) mindestens eine Öffnung (12, 12') umfasst, die durch sie durchgeht, die für das Austreten aus der Aufnahme (5) heraus einer Fassung (13, 13') der mindestens einen Lichtquelle (8, 8') bestimmt ist, **dadurch gekennzeichnet, dass** die Wand (3) des Stoßfängers (1) mindestens einen Schutzschirm (14, 14') umfasst, der außerhalb der Aufnahme (5) gegenüber der Öffnung (12, 12') angeordnet ist.

2. Stoßfänger (1) nach Anspruch 1, **dadurch gekennzeichnet, dass** der Schutzschirm (14, 14') in den Stoßfänger (1) eingeformt ist.

3. Stoßfänger (1) nach einem der Ansprüche 1 und 2, **dadurch gekennzeichnet, dass** der Schutzschirm (14, 14') eine Platte (15, 15') umfasst, die mit der Rückwand (3) des Stoßfängers (1) über mindestens einen Flügel (16, 16') fest verbunden ist, der die Platte (15, 15') parallel und in geringem Abstand (d1, d1') von der Öffnung (12, 12') anordnet.

4. Stoßfänger (1) nach Anspruch 3, **dadurch gekennzeichnet, dass** der Flügel (16, 16') fest mit der Platte (15, 15') an einem seiner Enden (17, 17) verbunden ist, indem er bezüglich der Platte (15, 15') entlang eines Winkels (A, A'), der zwischen 30° und 90° liegt, ausgerichtet ist.

5. Stoßfänger (1) nach einem der Ansprüche 3 und 4, **dadurch gekennzeichnet, dass** der Schutzschirm (14, 14') eine Pratze (19, 19') zum Stützen der Platte (15, 15') gegen ihr Knicken umfasst.

6. Stoßfänger (1) nach Anspruch 5, **dadurch gekennzeichnet, dass** der Flügel (16, 16') und die Pratze (19, 19') jeweils an entgegengesetzten Enden (17, 17'; 18, 18') der Platte (15, 15') eingerichtet sind.

7. Stoßfänger (1) nach einem der Ansprüche 5 und 6, **dadurch gekennzeichnet, dass** die Pratze (19, 19') als Sicherung, die fähig ist, unter der Einwirkung einer vorbestimmten Kraft, die sie erträgt, zu brechen.

8. Stoßfänger (1) nach einem der Ansprüche 5 bis 7, **dadurch gekennzeichnet, dass** die Pratze (19, 19') aus mindestens einer Lasche (20, 20'), die die Platte (15, 15') mit der Rückwand (3) des Stoßfängers (1) verbindet, gebildet ist.

9. Anordnung, die einen Stoßfänger (1) nach einem der Ansprüche 1 bis 8 und mindestens eine Beleuchtungsvorrichtung (4) umfasst, die auf den Stoßfänger (1) montiert ist, indem sie in dem Inneren einer Aufnahme (5) angeordnet ist.

10. Kraftfahrzeug, das mit einer Anordnung nach Anspruch 9 ausgestattet ist.

## Claims

1. A bumper (1) for a motor vehicle, the bumper (1) comprising at least one housing (5) for receiving a lighting device (4) including at least one light source (8, 8'), a wall (3) of the bumper (1) comprising, passing through it, at least one opening (12, 12') the dedicated purpose of which is the emergence from the housing (5) of a socket (13, 13') of said at least one light source (8, 8'), **characterized in that** said wall (3) of the bumper (1) comprises at least one screen (14, 14') disposed outside said housing (5) facing said opening (12, 12').

2. The bumper (1) according to Claim 1, **characterized in that** the screen (14, 14') is integrated by moulding with the bumper (1).

3. The bumper (1) according to any one of Claims 1 and 2, **characterized in that** the screen (14, 14') includes a plate (15, 15') integral with the rear wall (3) of the bumper (1) by means of at least one wing (16, 16') arranging the plate (15, 15') in a parallel manner and at a small distance (d1, d1') from the opening (12, 12').

4. The bumper (1) according to Claim 3, **characterized in that** the wing (16, 16') is integral with the plate (15, 15') at one of its ends (17, 17'), being oriented with respect to the plate (15, 15') along an angle (A, A') comprised between 30° and 90°.

5. The bumper (1) according to any one of Claims 3 and 4, **characterized in that** the screen (14, 14') includes a support lug (19, 19') of the plate (15, 15') in opposition to its flexing.

6. The bumper (1) according to Claim 5, **characterized in that** the wing (16, 16') and the lug (19, 19') are respectively arranged at opposite ends (17, 17'; 18, 18') of the plate (15, 15').

7. The bumper (1) according to any one of Claims 5 and 6, **characterized in that** the lug (19, 19') is arranged as a fuse able to break under the effect of a predetermined force which it supports.

8. The bumper (1) according to any one of Claims 5 to 7, **characterized in that** the lug (19, 19') is formed by at least one tongue (20, 20') connecting the plate (15, 15') to the rear wall (3) of the bumper (1).

9. An assembly including a bumper (1) according to any one of Claims 1 to 8 and at least one said lighting device (4) mounted on the bumper (1), being disposed in the interior of a said housing (5).

10. A motor vehicle equipped with an assembly according to Claim 9.
